# EUROPEAN PATENT SPECIFICATION

(11) **EP 1 267 498 B1**
(45) Date of publication and mention of the grant of the patent: **13.12.2006**
(21) Application number: 02396070.1
(22) Date of filing: 17.05.2002
(51) Int. Cl.: H04B 1/707, G01S 1/04

(54) **A method and apparatus for controlling the operation of a positioning receiver**
Verfahren und Vorrichtung zur Betriebssteuerung eines Positionsempfängers
Methode et appareil pour controler les operations d'un recepteur de positionnement

(30) Priority: 25.05.2001 FI 20011095
(43) Date of publication of application: 18.12.2002
(73) Proprietor: Nokia Corporation, 02150 Espoo (FI)
(72) Inventor: Pietilä, Samuli, 33100 Tampere (FI); Valio, Harri, 34240 Kämmenniemi (FI)
(74) Representative: Pursiainen, Timo Pekka

(56) References cited:
- EP-A- 0 691 754
- EP-A- 0 932 263
- EP-A- 1 128 563
- EP-A- 1 143 652
- WO-A-95/14937
- WO-A-97/06446
- WO-A-98/02758
- GB-A- 2 278 983
- US-A- 5 600 670
- US-A- 5 684 793
- US-A- 5 692 008
- US-A- 5 781 152
- US-B1- 6 175 587

## Description

The present invention relates to a method for controlling the operation of a receiver, in which at least one spread spectrum modulated signal is received on at least two receiving channels, a reference signal is formed on said at least two receiving channels by using a reference code corresponding to the code used in the modulation of the signal to be received, the received signal and the reference signal are correlated and a set of correlators is used in the receiver. The invention also relates to an electronic device comprising a receiver for receiving at least one spread spectrum modulated signal on at least two receiving channels, means for forming a reference code to correspond to the code used in the modulation of the signal to be received, means for generating a reference signal by using said reference code, means for performing correlation of the received signal and the reference signal and said means for correlating comprise a set of correlators.

In positioning systems based on satellite positioning, a positioning receiver attempts to receive the signals of at least four satellites in order to find out the position of the positioning receiver and time. An example of such a satellite positioning system is the GPS system (Global Positioning System), comprising a plurality of satellites orbiting the globe according to predefined orbits. These satellites transmit positioning data, on the basis of which the position of a satellite can be determined at each moment of time, in case the exact time data used in the satellite positioning system is known in the positioning receiver. In the GPS system, the satellites transmit a spread spectrum signal modulated with a code which is individual for each satellite. Thus, the positioning receiver can distinguish the signals transmitted by the different satellites from each other by using a reference code which corresponds to the satellite code and is generated locally in the positioning receiver.

A problem in such positioning systems based on satellite positioning is often the fact that the signal transmitted by a satellite is strongly attenuated when it arrives at the positioning receiver, wherein it is very difficult to distinguish the signal from background noise. The signal is attenuated *e.g*. by climatic conditions and obstacles, such as buildings and surrounding ground topography on the path of the signal. Also, the signal may come into the positioning receiver via a plurality of different routes which causes so-called multipath propagation and aggravates the acquisition of a desired signal in the positioning receiver, because the transmitted signal arrives at the receiver via different paths, for example straight from the satellite (line-of-sight) and also reflected. Due to this multipath propagation, the same signal is received as several signals with different phases. It is particularly difficult to perform positioning inside a building, because the building itself strongly attenuates the signal transmitted by satellites and, on the other hand, multipath propagation may be even stronger, because possibly reflected signals coming for example through a window are not necessarily as attenuated as signals coming straight through the roof. In this case, the receiver may misinterpret the signal propagation time and the satellite position at the moment of transmission of the signal, due to *e.g*. said lag in the signal propagation time, caused by the multipath propagation

Each operating satellite of the GPS system transmits a so-called L1 signal at the carrier frequency of 1575.42 MHz. This frequency is also indicated with 154f₀, where f₀ = 10.23 MHz. Furthermore, the satellites transmit another ranging signal at a carrier frequency of 1227.6 MHz called L2, *i.e.* 120f₀. In the satellite, these signals are modulated with at least one pseudo random sequence. This pseudo random sequence is different for each satellite. As a result of the modulation, a code-modulated wideband signal is produced. The modulation technique used makes it possible to distinguish, in the receiver, the signals transmitted from different satellites, although the carrier frequencies used in the transmission are substantially the same. This modulation technique is called code division multiple access (CDMA). In each satellite, for modulating the L1 signal, the pseudo random sequence used is *e.g.* a so-called C/A code (Coarse/Acquisition code), which is a code from the family of the Gold codes. Each GPS satellite transmits a signal by using an individual C/A code. The codes are formed as a modulo-2 sum of two 1023-bit binary sequences. The first binary sequence G1 is formed with a polynome X¹⁰ + X³ + 1, and the second binary sequence G2 is formed by delaying the polynome X¹⁰ + X⁹ + X⁸ + X⁶ + X³ + X² + 1 in such a way that the delay is different for each satellite. This arrangement makes it possible to produce different C/A codes by identical code generators. The C/A codes are thus binary codes whose chipping rate in the GPS system is 1.023 MHz. The C/A code comprises 1023 chips, wherein the iteration time (epoch) of the code is 1 ms. The carrier of the L1 signal is further modulated by navigation information at a bit rate of 50 bit/s. The navigation information comprises information about the "health", orbit, time data of the satellite, *etc.*

To detect the signals of the satellites and to identify the satellites, the receiver must perform acquisition, whereby the receiver searches for the signal of each satellite at the time and attempts to be synchronized and locked to this signal so that the data transmitted with the signal can be received and demodulated.

The positioning receiver must perform the acquisition *e.g.* when the receiver is turned on and also in a situation in which the receiver has not been capable of receiving the signal of any satellite for a long time. Such a situation can easily occur *e.g*. in portable devices, because the device is moving and the antenna of the device is not always in an optimal position in relation to the satellites, which impairs the strength of the signal coming into the receiver.

Almost all known GPS receivers utilize correlation methods for acquisition of the code as well as for tracking. Reference codes ref(k), *i.e*. the pseudo random sequences for different satellites are stored or generated locally in the positioning receiver. A received signal is subjected to conversion to an intermediate frequency (down conversion), after which the receiver multiplies the received signal with the stored pseudo random sequence. The signal obtained as a result of the multiplication is integrated or low-pass filtered, wherein the obtained result is information on whether the received signal contained a signal transmitted by a satellite. The multiplication is iterated in the receiver so that the phase of the pseudo random sequence stored in the receiver is shifted each time. The correct phase is determined from the correlation result preferably so that when the correlation result is the greatest, the correct phase has been found. Thus, the receiver is correctly synchronized with the received signal. After the code acquisition has been completed, the next steps are frequency tuning and phase locking.

The above-mentioned acquisition and frequency control process must be performed for each signal of a satellite which is received in the receiver. Some receivers may have several receiving channels, wherein an attempt is made on each receiving channel to acquire the signal of one satellite at a time and to find out the information transmitted by this satellite.

A typical GPS receiver comprises three correlators for each receiving channel. With the three correlators, it is only possible to cover the time of one chip (1 µs). In such a receiver, the correlators are typically early (E), *i.e*. leading a correlation peak; prompt (P), *i.e*. at the correlation peak; and late (L), *i.e*. behind the correlation peak. However, if there is, for example, considerable multipath interference in the satellite signal to be received on any channel, said three correlators will not be sufficient. This problem could be solved by providing a greater number of correlators for each channel. As a result, however, the structure of the receiver will become more complex and larger in size. Furthermore, the power consumption of the receiver may increase to a significant degree. For example, if there are 12 channels and 10 correlators are provided for each channel, the total number of the correlators will be as high as 120. However, most of these correlators may be redundant for a long time during the operation of the receiver.

In a prior art receiver, it is possible to set all the channels of such a receiver provided with fixed correlators to search for the same satellite. In this case, however, the channels must be re-initialized, which means that the reference codes must be timed so that different channels search for different chips in different parts of the satellite signal. This takes time, and moreover, the channels cannot receive signals from other satellites during the time of searching for one satellite.

The document WO 95/14937 relates to a receiver for pseudorandom noise (PRN) encoded signals consisting of a sampling circuit, multiple carrier and code synchronizing circuits, and multiple digital correlators. The sampling circuit provides digital samples of a received composite signal to each of the several receiver channel circuits. The synchronizing circuits are preferably non-coherent, in the sense that they track any phase shifts in the received signal and adjust the frequency and phase of a locally generated carrier reference signal accordingly, even in the presence of Doppler or ionospheric distortion. The multiple correlators in each channel correlate the digital samples with locally generated PRN codes having multiple offsets, to produce a plurality of correlation signals. The plurality of correlation signals are fed to a parameter estimator, from which the delay and phase parameters of the direct path signal, as well as any multipath signals, may be estimated, and from which a range measurement may be corrected (abstract). In the system of WO 95/14937 the multiple of correlators within a channel can not be used by another channel. Hence, all the channels comprise their own correlators. The total number of correlators is then the number of channels multiplied by the number of correlators within each channel, assuming that each channel has the same number of correlators.

The document WO 98/02758 relates to a direct sequence spread spectrum receiver which samples an incoming signal and stores the sample in memory. Power is then inhibited to the tuner of the receiver to minimize power consumption. The signal sample may be read from memory when necessary to process the signal without further signal acquisition. Power to other receiver sections may be selectively controlled to minimize power consumption. Such a receiver is useful in global positioning satellite (GPS) signal processing when the receiver has a limited power supply (abstract). On page 22 lines 26-31 it is mentioned that multiple digital correlators can be used, each driven with a differently delayed version of the replica signal. However, each correlator is reserved to the use of one channel.

The document US 5,692,008 relates to a method and device for processing a signal, wherein an estimate of a multipath-induced contribution to a demodulated navigation signal is calculated and subtracted from said demodulated navigation signal to obtain an estimated line of sight contribution to said demodulated navigation signal, and a propagation time τ₀ is calculated from the thus calculated line of sight contribution to said demodulated navigation signal, such that a very accurate propagation time τ₀ of said navigation signal can be calculated (abstract). In US 5,692,008 there is disclosed a multiple of correlators for the receiver. However, the receiver has only one channel. This means that all the correlators are reserved for this one channel only.

It is an aim of the present invention to provide a method for controlling the operation of a receiver in such a way that the operation of the receiver can be adjusted to be as advantageous as possible in view of the receiving conditions at the time, without the need to complicate the structure of the receiver to a significant degree. It is another aim of the invention to provide a relatively simple receiver whose operation can be adjusted according to the receiving conditions. More precisely, the method according to the present invention is primarily characterized in what is presented in the characterising part of claim 1. The electronic device according to the present invention is primarily characterized in what is presented in the characterising part of claim 7.

Considerable advantages are achieved by the present invention when compared with methods and positioning receivers of prior art. In the method according to the present invention, the operation of the positioning receiver can be controlled in such a way that on each receiving channel, the number of correlators can be adjusted on the basis of the receiving conditions on the channel; consequently, variations in the signal strength and the effect of possible multipath-propagated signals on the reception can be eliminated better than in receivers of prior art. Acquisition can thus be made also in a situation in which the signal strength is relatively weak and the signal is noisy on some channels. When applying the method of the invention, the structure of the positioning receiver can be made simpler than in solutions of prior art, in which a fixed number of correlators is used on each channel. Furthermore, when applying the method of the invention, it is possible to perform acquisition of the signal faster, because the number of correlators used on a channel can be increased on such a channel in which reacquisition is necessary.

In the following, the present invention will be described in more detail with reference to the appended drawings, in which
- Fig. 1: shows an electronic device according to a preferred embodiment of the invention in a reduced block chart,
- Fig. 2: shows an acquisition block according to an advantageous embodiment of the invention in a reduced block chart, and
- Fig. 3: shows an acquisition block according to another advantageous embodiment of the invention in a reduced block chart.

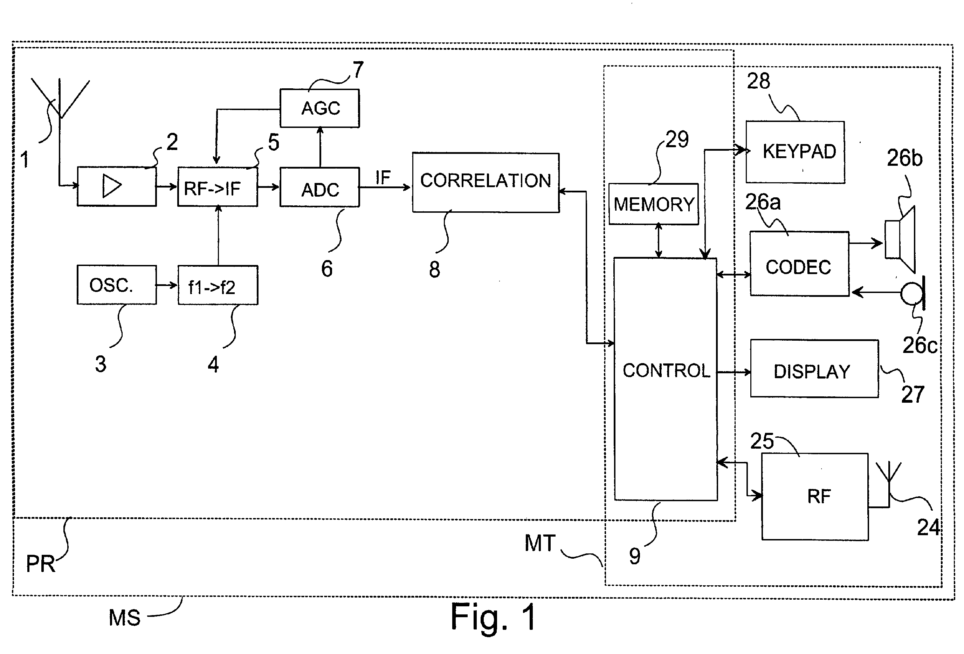

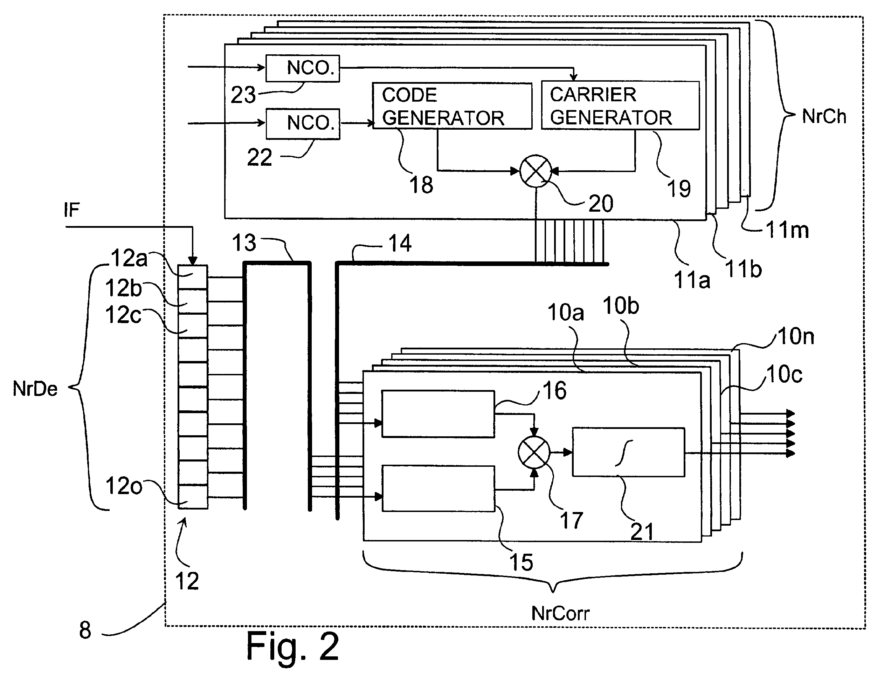

In the following, the operation of a receiver PR according to an advantageous embodiment of the invention will be described with reference to the reduced block charts of Figs. 1 and 2. A spread spectrum modulated signal to be received via an antenna 1 is amplified in a highfrequency amplifier 2 and is modified, by means of a clock signal formed by a clock generator 3 and a frequency synthesizer 4, preferably to an intermediate frequency or directly to baseband in a converter block 5. At this stage, the signal is advantageously still in analog format, wherein it is converted to a digital signal in an analog-to-digital converter 6. The analog-to-digital converter 6 provides not only a digital receiving signal but also a control to an automatic gain control (AGC) block 7 which attempts to level out variations in the strength of the received signal in a way known as such. The digital signal converted to an intermediate frequency or to baseband is led to one or more digital monitoring blocks 8 to perform conversion of the digital signal to two signals with different phases (I/Q), multiplication with a reference code, and correlation. The signals formed in the monitoring block 8 are further conducted to a control block 9 to find out the code phase and the frequency shift of the received signal on the basis of the correlation. The control block 9 forms feedback to the monitoring block 8, to adjust the code phase of the reference code and a carrier generator 23, if necessary. After the code phase and the frequency shift have been determined, that is, the receiver has tracked the signal to be received, it is possible to start demodulation and storage of the navigation information transmitted in the signal, if necessary. The control block 9 preferably stores navigation information in a memory 29.

An advantageous structure of the digital monitoring block 8 is presented in the block chart of Fig. 2. The monitoring block 8 comprises a set of correlator blocks 10a-10n as well as a set of code and carrier blocks 11a-11m. Thus, each code and carrier block 11a-11m forms one receiving channel. Thus, the number of the code and carrier blocks 11a-11m is affected, for example, by the number of satellites whose signals are to be received simultaneously by the positioning receiver. The number of correlator blocks 10a-10n is, in turn, affected by the minimum number of correlators available on each receiving channel and by the desired total number of correlators. For example, if at least three correlators are to be used on each channel, the number of correlators required is three times the number of channels. However, it is obvious that the invention is not limited solely to applications of this kind, but the number of correlator blocks can also be determined on another basis. The figure only shows the structures of one correlator block 10a and one code and carrier block 11a, but the structures of the other correlator blocks 10b-10n as well as the other code and carrier blocks 11b-11m are, for their essential parts, similar in function. Furthermore, the monitoring block has substantially identical functional parts for the processing of the bicomponent signal (I, Q), but for the sake of clarity, Fig. 2 only shows the functional parts which are essential for describing the invention, with respect to a single signal component only.

The processing of the received signal is preferably performed in the monitoring block 8 according to an advantageous embodiment of the invention. The digital signal converted to an intermediate frequency or a baseband is conducted to a delay line 12. The output lines of the delay blocks 12a-12o of the delay line 12 are connected to a first signal bus 13. Furthermore, in each correlator block 10a-10n of the monitoring block 8, each signal line of this first signal bus is connected to one input line of a first selection block 15. Thus, in the first selection block 15, any input line of the first selection block 15 can be selected as the output signal of the selection block.

The code and carrier block 11 a-11m comprises a reference code generator 18 to form a reference code which corresponds to the code used by the satellite which transmits the signal received by said code and carrier block 11a-11m. The code and carrier block 11a-11m further comprises a carrier generator 19 to find out the frequency shift of the signal to be received. The signal generated by the carrier generator 19 and the reference code generated by the reference code generator are multiplied in a multiplier block 20, after which the signal obtained as the product is conducted to a second signal bus 14. Via the second signal bus 14, the signal formed by the multiplier block 20 can be conducted to the second selection block 16 in each correlator block 10a-10n, wherein the second selection block in each correlator block can select, from the signals of the multiplier blocks 20 of the different code and carrier blocks 11a-11m, the signal required at the time to be coupled to the output of the second selection block 16. The output of the second selection block is connected to the first input of the code multiplier 17, and the input line of the first selection block 15 is connected to the second input of the code multiplier 17.

In the code multiplier 17, the signal selected for the output line of the first selection block 15 is multiplied by the signal selected for the output line of the second selection block 16. The signal formed in the code multiplier is advantageously integrated in an integrator 21, preferably for a predetermined time, after which the signal generated by the integrator 21 is conducted to the control block 9 for analysis.

By means of the first 15 and second 16 selection blocks, however, each channel can be allocated a given number of correlators according to the receiving conditions on the different channels. For example, when starting the positioning, the receiving conditions can be assumed to be substantially identical on all channels, unless the positioning receiver has previously determined and updated information about the receiving conditions. Thus, the control unit 9 preferably sets the same number of correlator blocks 10a-10n for each channel, preferably three for each channel. This can be performed, for example, so that the control block 9 allocates the first three correlator blocks 10a, 10b, 10c to the first channel, *i.e*. to the first code and carrier block 11a. In a corresponding manner, the next three correlator blocks are allocated to the second code and carrier block 11b, and so on. In addition, the selection must still be made in each correlator block, from which location of the delay line 12 the signal is taken into the respective correlator block. At this starting stage, the signal can be conducted, for example, from the first delay element 12a of the delay line into the first correlator block, from the second delay element 12b of the delay line into the second correlator block, and from the third delay element of the delay line into the third correlator block. In a corresponding manner, the signal can be conducted from the first delay element 12a of the delay line into one correlator block of the second channel, from the second delay element 12b into the next correlator block of the second channel, and from the third delay element 12c into the yet following correlator block of the second channel. Corresponding steps can also be taken on the other channels.

The delay in each delay block 12a-12o of the delay line can be preferably selected so that a sufficient resolution is achieved at the correlation stage. For example, each delay block produces a delay of one sample, which corresponds, for example at a sample frequency of 2 MHz, to a delay of 0.5 µs. It is obvious that also other delay values and sample frequencies can be applied in connection with the present invention.

In addition to the selection of the signals taken from the delay line 12, the correlator block 10a-10n must select the signal generated by a code and carrier block 11a-11m for the correlation of the received signal with the signal formed by the code and carrier block 11a-11m. This is performed so that in the second selection block 16 of the correlator blocks selected for a given channel, the signal of the code and carrier block 11 a-11 m corresponding to the respective channel is selected as the output signal. In this example, this means that in the second selection block 16 of the correlator blocks 10a, 10b, 10c selected for the first channel, the output signal is selected to be the signal of the first code and carrier block 11a. In a corresponding manner, the output signal of the second selection block 16 of the correlator blocks selected for the second channel is selected to be the signal of the second code and carrier block 11b, and so on.

The selection blocks 15, 16 used can be, for example, binary selection blocks (multiplexers), in which one input line at a time can be connected to the output line. The selection functions of the selection blocks 15, 16 can be controlled in a way known as such, for example in such a way that the control block 9 sets a given binary digit in the control input of the selection block, wherein the signal in the input line corresponding to the set binary digit is connected to the output line. The number of bits in this binary digit depends, for example, on the number of available input lines, which is known as such.

In the control block 9, it is determined, on the basis of the output signals of the different integration blocks, *e.g*. whether the code phase of the reference code is leading (E, early), behind (L, late) or in the same phase (P, prompt) as the code phase of the received signal. On the basis of this determination, the control block 9 adjusts the frequency of a numerically controlled oscillator 22 controlling the reference code generator 18, and/or selects, from the delay line 12, the different delay blocks from which the signal is taken into the correlator blocks of the respective receiving channel. Furthermore, the control block 9 determines the frequency shift, if any, and adjusts the frequency of a numerically controlled oscillator 23. On one channel of the monitoring block 8, signal processing can be performed for one signal at a time, wherein to receive *e.g*. four signals simultaneously, there must be at least four channels in the monitoring blocks. It is obvious that the receiver shown in Figs. 1 and 2 is only an example embodiment, but the present invention is not limited for use in this receiver only.

If, on any channel, the receiver cannot perform signal acquisition, or if the receiver loses the signal *e.g.* after the signal has been significantly attenuated due to an obstacle on the signal path, it is possible, in the method according to an advantageous embodiment of the invention, to take the following steps. The control block 9 determines if there are vacant correlator blocks, wherein these vacant correlator blocks can be allocated to such a channel on which acquisition is not possible or signal has been lost. On the other hand, from channels on which the signal quality is relatively good, part of the correlator blocks selected for such a channel can be allocated to another channel for acquisition. Thus, this channel will have more correlator blocks available, wherein a longer time can be selected from the delay line to perform the correlation measures. On the basis of the signals formed by several correlator blocks, the control block 9 may try to determine if the acquisition failure is due to *e.g.* multipath propagation. Thus, when several correlator blocks are used, it is easier to distinguish multipath propagated signals from each other and to find the correct code phase and the frequency shift. Due to multipath-propagated signals, it may in some cases be necessary to perform correlation on one channel at intervals of about 0.1 to 0.2 µs, wherein the period of one chip (~1 µs) can be covered by 5 to 10 correlators. If there is a sufficient number of correlator blocks available, it is possible to achieve, with *e.g*. about 50 correlator blocks, a correlation time interval which is sufficiently dense and temporally sufficiently long in many situations. Thus, by the method according to the present invention, correlator blocks can be allocated to different channels according to the need at the time, and the total number of correlator blocks can thus be kept reasonable.

The method of the invention can also be applied in a situation in which all the receiving channels are set to search for a given satellite. Thus, because all the correlator blocks can be set to receive the signal of this satellite to be searched for, the search area can be prolonged. However, in solutions of prior art, in which a fixed number of correlators is allocated to each channel, searching can only be performed for a limited area.

In addition, the control block 9 can monitor variations in the positioning which is to be performed on the basis of the different receiving channels. If significant deviations are detected on any channel, the control block 9 may try to correct the situation by allocating several correlator blocks to such a channel. In some situations, this may improve the operation of the receiving channel and thereby reduce inaccuracy in the positioning.

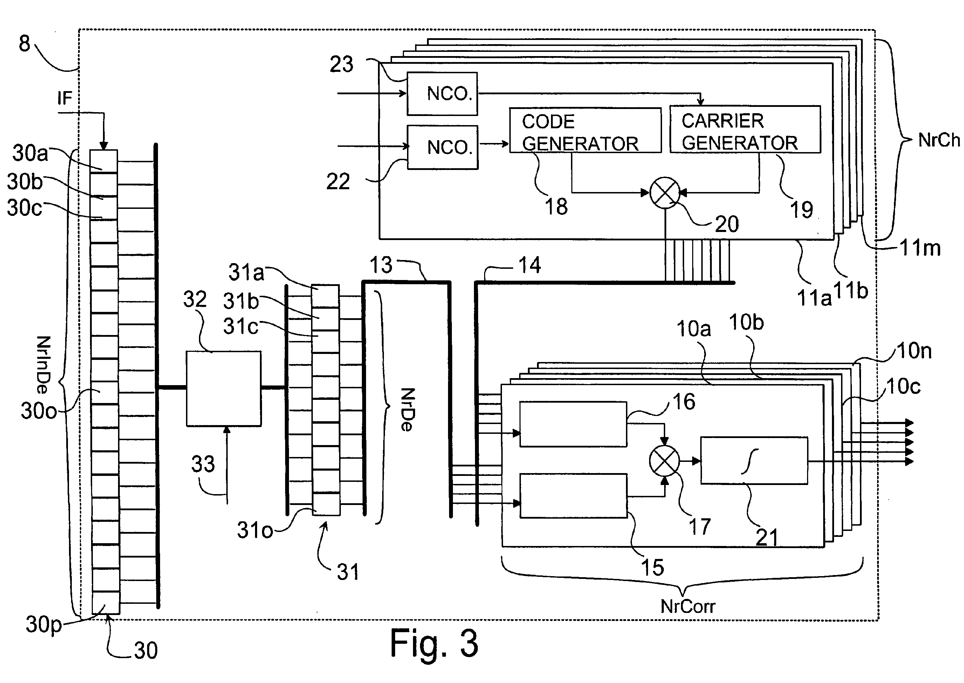

Figure 3 shows the structure of a monitoring block 8 according to another advantageous embodiment of the invention in a reduced block chart. The difference in this embodiment from the monitoring block 8 of Fig. 2 lies primarily in that the delay line 12 is divided into at least a first 30 and a second delay line 31. Thus, in a third selection block 32, signals can be selected from the first delay line to be transferred to the second delay line. By means of the two delay lines 30, 31 and the third selection block, it is possible to extend the delay line 12 and still to keep the size of the first selection blocks 15 of the correlator blocks 10 within reasonable limits.

The output line of each delay block 30a-30p in the first delay line 30 is connected to one input line of the third selection block 32. In the first delay line 30, the number of delay blocks 30a-30p is set greater than the number of delay blocks 31a-31o in the second delay line. In a corresponding manner, the number of delay blocks 31a-31o in the second delay line 31 can be set, for example, equal to the number of delay blocks 12a-12o in the delay line 12 used in the monitoring block according to the first advantageous embodiment of the invention. Each output line of the third selection block 32 is connected to one delay block 31a-31o in the second delay line 31. Thus, information is transferred in parallel form from the first delay line 30 by means of the third selection block 32 into the second delay line 31.

The processing of the received signal is performed in the monitoring block 8 according to this second advantageous embodiment of the invention in the following way. The digital signal converted to an intermediate frequency or a baseband is conducted to the first delay line 30. After this, the information is transferred in such a way that a numerical value is set in the selection lines 33 of the third selection block 32, to indicate the desired location in the first delay line 30. As a result of this, the signals of the delay blocks of the first delay line 30 are coupled, from this location selected by the selection lines 33 (*e.g.* delay blocks 30a-30o), to the output lines of the third selection block 32, and the signals are stored in the delay blocks 31a-31o of the second delay line 31. Consequently, the third selection block 32 can be used to select a number, corresponding to the length of the second delay line, of available delay blocks in the first delay line 30. After the necessary information has been transferred to the second delay line 31, the information can be transferred further to the correct correlator block 10a-10n, as presented in connection with the description on the operation of the monitoring block 8 according to the first advantageous embodiment of the invention. After this, it is possible to repeat the above-presented operations, by which information is transferred from the first delay line 30 to the second delay line 31 and further to a specific correlator block 10a-10n.

In other respects, the operation of the monitoring block according to the second advantageous embodiment of the present invention corresponds to the description on the operation presented above in this specification, wherein its more detailed discussion in this context will be rendered unnecessary.

The receiver PR preferably also comprises means for performing the functions of a wireless communication device, such as a second antenna 24, a radio part 25, audio means, such as a codec 26a, a speaker 26b and a microphone 26c, a display 27, a keypad 28, and a memory 29. The control block 9 can be at least partly common to perform the functions of the receiver PR and to perform the functions of the wireless communication device, or separate processors or the like can be used for these functions.

Although the invention has been described above by using, as an example of a spread-spectrum modulated signal, a spread-spectrum modulated signal used in a satellite system and modulated with an individual code, the invention can also be applied in other systems which use spread spectrum modulation and in which the different states of the binary and other information are modulated with symbols.

It is obvious that the present invention is not limited solely to the above-presented embodiments, but it can be modified within the scope of the appended claims.

## Claims

1. A method for controlling the operation of a receiver (PR), in which at least one spread spectrum modulated signal is received on at least two receiving channels (11a-11m), a reference signal is formed on said at least two receiving channels (11 a-11m) by using a reference code corresponding to the code used in the modulation of the signal to be received, the received signal is correlated with the reference signal, and a set of correlators (17, 21) is used in the receiver (PR), **characterized in that** any correlator of said set of correlators (17, 21) can be connected to any one of said at least two receiving channels,
wherein the method comprises
- selecting a number of correlators (17, 21) from said set of correlators (17, 21);
- selecting a receiving channel (11a-11m) among said at least two receiving channels (11a-11m) for the selected correlators (17, 21);
- connecting the selected receiving channel (11a-11m) to the selected correlators (17, 21); and
- using the selected correlators (17, 21) in the correlation of the signal received by the receiving channel (11a-11m) with the corresponding reference signal,
wherein those correlators of said set of correlators (17, 21) which are not connected to the selected receiving channel are vacant to be used in performing a correlation of a signal received by another receiving channel of said at least two receiving channels (11a-11m).

2. The method according to claim 1, **characterized in that** the number of correlators (17, 21) required for the correlation on each receiving channel (11 a-11 m) is determined, and the number of correlators (17, 21) which corresponds to the determined required number of correlators for each receiving channel (11a-11m) is selected from said set of correlators (17, 21), and each receiving channel (11a-11m) is connected to the selected correlators (17, 21).

3. The method according to claim 1 or 2, **characterized in that** to produce said reference signal, a carrier signal is generated, which is multiplied with said reference code.

4. The method according to claim 1, 2 or 3, **characterized in that** the received signal is delayed, and a part of the delayed signal is selected to be conducted to at least one correlator selected for each receiving channel (11a-11m).

5. The method according to claim 4, **characterized in that** to search for a correlation peak, signals formed by the correlators (17, 21) selected for the receiving channel (11a-11m) are examined, and if no correlation peak has been found, another part of the delayed signal is selected for the correlation, wherein the steps of examining and selecting are iterated, until a correlation peak is found.

6. The method according to any of the claims 1 to 5, **characterized in that** the received signal is delayed in a first delay line (30) providing a multiple of delayed outputs, one delayed output is selected as the output of a delayed received signal, the output is connected to a second delay line (31) providing a multiple of output signals, and search for a correlation peak, signals formed by the correlators (17, 21) selected for the receiving channel (11a-11m) are examined, and if no correlation peak has been found, another part of the delayed signal is selected for the correlation, wherein the steps of examining and selecting are iterated, until a correlation peak is found.

7. An electronic device (MS) comprising a receiver (PR) for receiving at least one spread spectrum modulated signal on at least two receiving channels (11a-11m), means (18) for forming a reference code corresponding to the code used in the modulation of a signal to be received, means (19, 20) for forming a reference signal by using said reference code, and means (8) for correlating the received signal with the reference signal, and said means (8) for correlating comprise a set of correlators (17, 21), **characterized in that** the electronic device (MS) comprises means for allocating correlators (17, 21) to receiving channels (17, 21) comprising
- means (9, 16) for selecting a number of correlators (17, 21) from said set of correlators (17, 21)
- means (9, 15) for selectinga receiving channel (11a-11m) among said at least two receiving channels (11a-11 m) for the selected correlators (17, 21); and
- means (13, 16) for connecting the selected receiving channel (11a-11 m) to the selected correlators (17, 21);
wherein all the other correlators of said set of correlators (17, 21) remain unconnected to a receiving channel (11a-11m) and are usable in performing a correlation of a signal received by another receiving channel of said at least two receiving channels (11a-11m).

8. An electronic device according to claim 7, **characterized in that** it comprises means (9) for determining the number of correlators (17, 21) required in the correlation on each receiving channel (11a-11m), and means (9, 10a-10n) for selecting, from said set of correlators (17, 21), a number of correlators (17, 21) which corresponds to the need determined for each receiving channel (11a-11m), and means (16) for connecting each receiving channel (11a-11m) to the selected correlators (17, 21).

9. The electronic device according to claim 7 or 8, **characterized in that** the means (19, 20) for forming a reference signal comprise means (19) for forming a carrier signal, and means (20) for multiplying the carrier signal by said reference code.

10. The electronic device according to claim 7, 8 or 9, **characterized in that** it comprises at least one delay line (12) for delaying the received signal, and means (15) for selecting a part of the delayed signal to be conducted to at least one correlator (17, 21) selected for each channel.

11. The electronic device according to claim 10, **characterized in that** it comprises means (9) for searching for a correlation peak by examining the signals formed by the correlators (17, 21) selected for the channel, and means (9) for iterating the steps of examining and selecting, if no correlation peak has been found, wherein another part of the delayed signal is arranged to be selected for the correlation.

12. The electronic device according to any of claims 7 to 11, **characterized in that** it is a wireless communication device.

13. The electronic device according to any of claims 7 to 12, **characterized in that** it comprises
- a first delay line (30) for delaying the received signal and providing a multiple of delayed outputs;
- a selector (33) for selecting one delayed output as the output of a delayed received signal;
- a second delay line (31) providing a multiple of output signals,
- a connector for connecting the delayed output to the a second delay line (31); and
- means (13) for connecting the output signals from the second delay line (31) to said means for allocating correlators (17, 21) to receiving channels (17, 21).

## Patentansprüche

1. Verfahren zur Steuerung des Betriebs eines Empfängers (PR) ; in dem mindestens ein moduliertes Spreizband-Signal auf mindestens zwei Empfangskanälen (11a - 11m) empfangen wird, ein Referenzsignal auf den mindestens zwei Empfangskanälen (11a - 11m) unter Verwendung eines Referenzcodes ausgebildet wird, der dem Code entspricht, der bei der Modulation des zu empfangenden Signals verwendet wird, das empfangene Signal mit dem Referenzsignal korreliert wird und ein Satz von Korrelatoren (17, 21) in dem Empfänger (PR) verwendet wird, **dadurch gekennzeichnet, dass** jeder Korrelator des Satzes von Korrelatoren (17, 21) mit einem der mindestens zwei Empfangskanäle verbunden werden kann, wobei das Verfahren folgendes umfasst:
- Auswählen einer Anzahl von Korrelatoren (17, 21) aus einem Satz von Korrelatoren (17, 21),
- Auswählen eines Empfangskanals (11a - 11m) aus den mindestens zwei Empfangskanälen (11a-11m) für die ausgewählten Korrelatoren (17, 21),
- Verbinden des ausgewählten Empfangskanals (11a - 11m) mit den ausgewählten Korrelatoren (17, 21) und
- Verwenden der ausgewählten Korrelatoren (17, 21) bei der Korrelation des von dem Empfangskanal (11a - 11m) empfangenen Signals mit dem entsprechenden Referenzsignal,
wobei diese Korrelatoren des Satzes von Korrelatoren (17, 21), die nicht mit dem ausgewählten Empfangskanal verbunden sind, für die Verwendung bei der Durchführung einer Korrelation eines von einem anderen Empfangskanal der mindestens zwei Empfangskanäle (11a - 11m) empfangenen Signals frei sind.

2. Verfahren nach Anspruch 1, **dadurch gekennzeichnet, dass** die Anzahl der Korrelatoren (17, 21), die für die Korrelation an jedem Empfangskanal (11 a-11m) erforderlich ist, bestimmt wird und die Anzahl der Korrelatoren (17, 21), die der ermittelten erforderlichen Anzahl von Korrelatoren für jeden Empfangskanal (11a - 11m) entspricht, aus dem Satz von Korrelatoren (17, 21) ausgewählt wird und jeder Empfangskanal (11a - 11m) mit den ausgewählten Korrelatoren (17, 21) verbunden wird.

3. Verfahren nach Anspruch 1 oder 2, **dadurch gekennzeichnet, dass** zum Erzeugen des Referenzsignals ein Trägersignal erzeugt wird, das mit dem Referenzcode multipliziert wird.

4. Verfahren nach Anspruch 1, 2 oder 3, **dadurch gekennzeichnet, dass** das empfangene Signal verzögert wird und ein Teil des verzögerten Signals ausgewählt wird, um an mindestens einen für jeden Empfangskanal (11a - 11m) ausgewählten Korrelator geleitet zu werden.

5. Verfahren nach Anspruch 4, **dadurch gekennzeichnet, dass** zur Suche nach einer Korrelationsspitze von den Korrelatoren (17, 21) ausgebildete Signale, die für den Empfangskanal (11a- 11m) ausgewählt sind, untersucht werden, und wenn keine Korrelationsspitze gefunden wurde, ein anderer Teil des verzögerten Signals für die Korrelation ausgewählt wird, wobei die Schritte des Untersuchens und Auswählens wiederholt werden, bis eine Korrelationsspitze gefunden wurde.

6. Verfahren nach einem der Ansprüche 1 bis 5, **dadurch gekennzeichnet, dass** das empfangene Signal in einer ersten Verzögerungsleitung (30) verzögert wird, wodurch mehrere verzögerte Ausgaben bereitgestellt werden, ein verzögertes Signal als Ausgabe des verzögerten empfangenen Signals ausgewählt wird, die Ausgabe mit einer zweiten Verzögerungslei'tung, (31) verbunden ist, die mehrere Ausgabesignale bereitstellt, von den Korrelatoren (17, 21) ausgebildete Signale, die für den Empfangskanal (11a - 11m) ausgewählt werden, untersucht werden und wenn keine Korrelationsspitze gefunden wurde, ein anderer Teil des verzögerten Signals für die Korrelation ausgewählt wird, wobei die Schritte des Untersuchens und Auswählens wiederholt werden, bis eine Korrelationsspitze gefunden wurde.

7. Elektronische Vorrichtung (MS), umfassend einen Empfänger (PR) zum Empfang mindestens eines modulieren Spreizband-Signals auf mindestens zwei Empfangskanälen (11a - 11m), Mittel (18) zur Ausbildung eines Referenzcodes, der dem bei der Modulation des zu empfangenden Signals entspricht, Mittel (19, 20) zur Ausbildung eines Referenzsignals unter Verwendung des Referenzcodes und die Mittel (8) zur Korrelation umfassen einen Satz Korrelatoren (17, 21), **dadurch gekennzeichnet, dass** die elektronische Vorrichtung (MS) Mittel zur Zuweisung der Korrelatoren (17, 21) an Empfangskanäle (17, 21) umfasst, umfassend:
- Auswählen einer Anzahl von Korrelatoren (17, 21) aus einem Satz von Korrelatoren (17, 21),
- Mittel (9, 15) zur Auswahl eines Empfangskanals (11a - 11m) aus den mindestens zwei Empfangskanälen (11a - 11m) für die ausgewählten Korrelatoren (17, 21) und
- Mittel (13, 16) zur Verbindung des ausgewählten Empfangskanals (11a - 11m) mit den ausgewählten Korrelatoren (17, 21),
wobei alle anderen Korrelatoren des Satzes von Korrelatoren (17, 21) unverbunden mit einem Empfangskanal (11a - 11m) bleiben und bei der Durchführung eines Korrelation eines von einem anderen Empfangskanal der mindestens zwei Empfangskanäle (11a - 11m) empfangenen Signals nicht verwendbar sind.

8. Elektronische Vorrichtung nach Anspruch 7, **dadurch gekennzeichnet, dass** sie Mittel (9) zur Bestimmung der Anzahl der bei der Korrelation an einem Empfangskanal (11a - 11m) ?erforderlichen Korrelatoren (15, 21) und Mittel (9, 10a-10n) zur Auswahl einer Anzahl von Korrelatoren (17, 21) aus dem Satz von Korrelatoren (17, 21), die dem für jeden Empfangskanal (11a - 11m) ermittelten Bedarf entspricht, und Mittel (16) zur Verbindung jedes Empfangskanals (11a-11m) mit den ausgewählten Korrelatoren (17, 21) umfasst.

9. Elektronische Vorrichtung nach Anspruch 7 oder 8, **dadurch gekennzeichnet, dass** die Mittel (19, 20) zur Ausbildung eines Referenzsignals Mittel (19) Mittel zur Ausbildung eines Trägersignals und Mittel (20) zur Multiplizierung des Trägersignals mit dem Referenzcode umfasst.

10. Elektronische Vorrichtung nach Anspruch 7, 8 oder 9, **dadurch gekennzeichnet, dass** sie mindestens eine Verzögerungsleitung (12) zur Verzögerung des empfangenen Signals und Mittel (15) zur Auswahl eines Teils des verzögerten Signals umfasst, der an mindestens einen für jeden Kanal ausgewählten Korrelator (17, 21) geleitet werden soll.

11. Elektronische Vorrichtung nach Anspruch 10, **dadurch gekennzeichnet, dass** sie Mittel (9) zur Suche nach einer Korrelationsspitze durch Untersuchung der von den für den Kanal ausgewählten Korrelatoren (17, 21) ?ausgebildeten Signale und Mittel (9) zur Wiederholung der Schritte des Untersuchens und Auswählens, wenn keine Korrelationsspitze gefunden wurde, umfasst, wobei ein anderer Teil des verzögerten Signals für die Auswahl zur Korrelation eingerichtet wird.

12. Elektronische Vorrichtung nach einem der Ansprüche 7 bis 11, **dadurch gekennzeichnet, dass** sie eine drahtlose Kommunikationsvorrichtung ist.

13. Elektronische Vorrichtung nach einem der Ansprüche 7 bis 12, **dadurch gekennzeichnet, dass** sie umfasst:
- eine erste Verzögerungsleitung (30) zur Verzögerung des empfangenen Signals und Bereitstellung eines Vielfachen der Verzögerungsausgaben,
- einen Auswähler (33) zur Auswahl einer verzögerten Ausgabe als Ausgabe eines verzögerten empfangenen Signals,
- eine zweite Verzögerungsleitung (31), die ein Vielfaches der Ausgabesignale bereitstellt,
- einen Verbinder zur Verbindung der verzögerten Ausgabe mit einer zweiten Verzögerungsleitung (31) und
- Mittel (13) zur Verbindung der Ausgabesignale von der zweiten Verzögerungsleitung (31) mit dem Mittel zur Zuordnung der Korrelatoren (17, 21) an Empfangskanäle (17, 21).

## Revendications

1. Procédé de commande du fonctionnement d'un récepteur (PR), dans lequel au moins un signal modulé à spectre étalé est reçu sur au moins deux canaux de réception (11a à 11m), un signal de référence est formé sur lesdits au moins deux canaux de réception (11a à 11m) en utilisant un code de référence correspondant au code utilisé dans la modulation du signal devant être reçu, le signal reçu est corrélé avec le signal de référence et un ensemble de corrélateurs (17, 21) est utilisé dans le récepteur (PR), **caractérisé en ce qu'**un corrélateur quelconque dudit ensemble de corrélateurs (17, 21) peut être connecté à l'un quelconque desdits au moins deux canaux de réception, où le procédé comprend les étapes consistant à :
- sélectionner un certain nombre de corrélateurs (17, 21) à partir dudit ensemble de corrélateurs (17, 21),
- sélectionner un canal de réception (11a à 11m) parmi lesdits au moins deux canaux de réception (11a à 11m) pour les corrélateurs sélectionnés (17, 21),
- connecter le canal de réception sélectionné (11a à 11m) aux corrélateurs sélectionnés (17, 21), et
- utiliser les corrélateurs sélectionnés (17, 21) dans la corrélation du signal reçu par le canal de réception (11a à 11m) avec le signal de référence correspondant,
où ces corrélateurs dudit ensemble de corrélateurs (17, 21) qui ne sont pas connectés au canal de réception sélectionné sont vacants pour être utilisés pour exécuter une corrélation d'un signal reçu par un autre canal de réception desdits au moins deux canaux de réception (11a à 11m).

2. Procédé selon la revendication 1, **caractérisé en ce que** le nombre de corrélateurs (17, 21) requis pour la corrélation sur chaque canal de réception (11a à 11m) est déterminé, et le nombre de corrélateurs (17, 21) qui correspond au nombre requis déterminé de corrélateurs pour chaque canal de réception (11a à 11m) est sélectionné à partir dudit ensemble de corrélateurs (17, 21), et chaque canal de réception (11a à 11m) est connecté aux corrélateurs sélectionnés (17, 21).

3. Procédé selon la revendication 1 ou 2, **caractérisé en ce que**, pour produire ledit signal de référence, un signal de porteuse est généré, lequel est multiplié par ledit code de référence.

4. Procédé selon la revendication 1, 2 ou 3, **caractérisé en ce que** le signal reçu est retardé, et une partie du signal retardé est sélectionnée pour être conduite jusqu'à au moins un corrélateur sélectionné pour chaque canal de réception (11a à 11m).

5. Procédé selon la revendication 4, **caractérisé en ce que** pour rechercher un maximum de corrélation, des signaux formés par les corrélateurs (17, 21) sélectionnés pour le canal de réception (11a à 11m) sont examinés, et, si aucun maximum de corrélation n'a été trouvé, une autre partie du signal retardé est sélectionnée pour la corrélation, où les étapes d'examen et de sélection sont itérées, jusqu'à ce qu'un maximum de corrélation soit trouvé.

6. Procédé selon l'une quelconque des revendications 1 à 5, **caractérisé en ce que** le signal reçu est retardé dans une première ligne à retard (30) procurant de multiples sorties retardées, une sortie retardée est sélectionnée en tant que sortie d'un signal reçu retardé, la sortie est connectée à une seconde ligne à retard (31) procurant de multiples signaux de sortie, et une recherche d'un maximum de corrélation, des signaux formés par des corrélateurs (17, 21) sélectionnés pour le canal de réception (11a à 11m) sont examinés, et si aucun maximum de corrélation n'a été trouvé, une autre partie du signal retardé est sélectionnée pour la corrélation, où les étapes consistant à examiner et sélectionner sont itérées, jusqu'à ce qu'un maximum de corrélation soit trouvé.

7. Dispositif électronique (MS) comprenant un récepteur (PR) destiné à recevoir au moins un signal modulé à spectre étalé sur au moins deux canaux de réception (11a à 11m), un moyen (18) destiné à former un code de référence correspondant au code utilisé dans la modulation d'un signal devant être reçu, un moyen (19, 20) destiné à former un signal de référence en utilisant ledit code de référence, et un moyen (8) destiné à corréler le signal reçu avec le signal de référence, et ledit moyen (8) de corrélation comprend au moins un ensemble de corrélateurs (17, 21), **caractérisé en ce que** le dispositif électronique (MS) comprend un moyen destiné à allouer des corrélateurs (17, 21) aux canaux de réception (17, 21) comprenant
- un moyen (9, 16) destiné à sélectionner un nombre de corrélateurs (17, 21) à partir dudit ensemble de corrélateurs (17, 21),
- un moyen (9, 15) destiné à sélectionner le canal de réception (11a à 11m) parmi lesdits au moins deux canaux de réception (11a à 11m) pour les corrélateurs sélectionnés (17, 21), et
- un moyen (13, 16) destiné à connecter le canal de réception sélectionné (11a à 11m) aux corrélateurs sélectionnés (17, 21),
où la totalité des autres corrélateurs dudit ensemble de corrélateurs (17, 21) restent non connectés à un canal de réception (11a à 11m) et sont utilisables pour exécuter une corrélation d'un signal reçu par un autre canal de réception dudit au moins deux canaux de réception (11a à 11m).

8. Dispositif électronique selon la revendication 7, **caractérisé en ce qu'**il comprend un moyen (9) destiné à déterminer le nombre de corrélateurs (17, 21) requis dans la corrélation sur chaque canal de réception (11a à 11m), et un moyen (9, 10a à 10n) destiné à sélectionner, à partir dudit ensemble de corrélateurs (17, 21) un nombre de corrélateurs (17, 21) qui correspond au besoin déterminé pour chaque canal de réception (11a à 11m), et un moyen (16) destiné à connecter chaque canal de réception (11a à 11m) aux corrélateurs sélectionnés (17, 21).

9. Dispositif électronique selon la revendication 7 ou 8, **caractérisé en ce que** le moyen (19, 20) destiné à former un signal de référence comprend un moyen (19) destiné à former un signal de porteuse, et un moyen (20) destiné à multiplier le signal de porteuse dans ledit code de référence.

10. Dispositif électronique selon la revendication 7, 8 ou 9, **caractérisé en ce qu'**il comprend au moins une ligne à retard (12) destinée à retarder le signal reçu, et un moyen (15) destiné à sélectionner une partie du signal retardé à conduire à au moins un corrélateur (17, 21) sélectionné pour chaque canal.

11. Dispositif électronique selon la revendication 10, **caractérisé en ce qu'**il comprend un moyen (9) destiné à rechercher un maximum de corrélation en examinant les signaux formés par les corrélateurs (17, 21) sélectionnés pour le canal, et un moyen (9) destiné à itérer les étapes d'examen et de sélection, si aucun maximum de corrélation n'a été trouvé, où une autre partie du signal retardé est agencée pour être sélectionnée pour la corrélation.

12. Dispositif électronique selon l'une quelconque des revendications 7 à 11, **caractérisé en ce qu'**il s'agit d'un dispositif de communication sans fil.

13. Dispositif électronique selon l'une quelconque des revendications 7 à 12, **caractérisé en ce qu'**il comprend
- une première ligne à retard (30) destinée à retarder le signal reçu et à procurer de multiples sorties retardées,
- un sélecteur (33) destiné à sélectionner une sortie retardée en tant que sortie d'un signal reçu retardé,
- une seconde ligne à retard (31) procurant de multiples signaux de sortie,
- un connecteur destiné à connecter la sortie retardée à la seconde ligne à retard (31), et
- un moyen (13) destiné à connecter les signaux de sortie provenant de la seconde ligne à retard (31) audit moyen destiné à allouer des corrélateurs (17, 21) à des canaux de réception (17, 21).
